# EUROPEAN PATENT SPECIFICATION

(11) **EP 2 805 932 B1**
(45) Date of publication and mention of the grant of the patent: **24.10.2018**
(21) Application number: 13168640.4
(22) Date of filing: 22.05.2013
(51) Int. Cl.: C05F 17/00, C05F 17/02

(54) **An organic waste composter and a method of composting organic waste material**
Organischer Abfallkomposter und Verfahren zur Kompostierung von organischen Abfällen
Système de compostage de déchets organiques et procédé de compostage de déchets organiques

(43) Date of publication of application: 26.11.2014
(73) Proprietor: Grace Organic AB, 196 34 Kungsängen (SE)
(72) Inventor: Fransén, Claes, 243 93 Höör (SE); Blomstergren, Bertil, 214 66 Malmö (SE)
(74) Representative: Persson, Albin

(56) References cited:
- EP-A1- 0 606 617
- WO-A1-00/02832
- WO-A1-97/46499
- WO-A1-99/16730
- GB-A- 2 484 409
- US-A- 5 925 321

## Description

### TECHNICAL FIELD

The invention relates to a waste composter, and a method for efficient decomposition of compostable waste in a waste composter.

It is no longer possible to send waste food to landfill and the leachate generated from processing organic waste can no longer be dispersed into waterways as a result of leakage nor spread on the ground where animals are immediately grazing. Instead, there exists a requirement for industrial composting of organic waste in a controlled efficient manner whilst meeting health and safety regulations. Further, and not the least, there is a big need worldwide for ecological, quality certified, compost which, under controllable and specific process circumstances, is the end product from composting.

### PRIOR ART

Many composting machines presently used for composting household and professional kitchen waste are big, difficult and time-consuming to operate, emit inconvenient odours and lack adequate composting process control equipment. The operation of these composting machines is based on an arbitrary filling of the compost vessel with compostable waste, which is then allowed to decay. The results of these insufficiencies are composting process problems and an intricate and insecure use of the machines.

An organic waste composter as disclosed in GB2484409 has a vertically orientated processing vessel having a tank with heating units, a stirring mechanism comprising a plurality of agitators, a means for injection of preheated air, a waste inlet and a waste overflow/outlet at an upper section of the vessel. The waste is fed in through an inlet unit which is formed with a waste mincing mechanism. An auger feeds material into the vessel at a bottom end. Heating units arranged at the top and the bottom of the tank are controlled by temperature sensors and a controller. The composter also comprises means for injection of preheated air for composting waste. The angle of the main plane of at least one agitator is inclined to the horizontal to urge the composite waste material generally upwardly in the vessel.

A similar composting machine is disclosed in EP1115678. It comprises a vessel, a waste inlet at the bottom of the vessel, means for shredding waste supplied to the inlet, an agitator in the vessel, comprising a rotatable vertical shaft in the centre of the vessel and wings projecting radially from the shaft to agitate and mix the waste supplied to the vessel through the inlet at least one of said blades being skewed or bevelled to lift the waste in the vessel and thus move the waste from the bottom of the vessel to the top thereof, an air intake allowing air flow into the vessel in the lower region thereof, a discharge pipe for decomposed waste at the top of the vessel, and means providing a flow of air from the air intake through the vessel and the waste therein to the surroundings through the air outlet.

Prior art waste composters are not equipped with the necessary tools in order to obtain and maintain a secure and efficient composting process and the decomposed waste still may need further processing outside of the vessel, involving drying and sanitation, before being utilized. Further, they do not possess any equipment in order to avoid the emission of inconvenient odours.

### SUMMARY OF THE INVENTION

The present invention relates to an organic waste composter according to claim 1 and a method of composting organic waste material according to claim 11.

An object of the invention is to improve the efficiency of a composter while securing its intended composting process and radically simplify its operation. In accordance with the invention there is provided a more thorough mixing and agitation of the waste as well as dewatering thereof while avoiding clogging of the material in the vessel. In various embodiments the composter operates in accordance with a highly sophisticated automated software, including various automatically triggered working schemes depending on the composting process situation in the vessel

In accordance with the invention air is injected more evenly into a vertically orientated processing vessel. There is also a more continuous supply of air to the material in the vessel and distribution of the air throughout the waste in order to maintain and promote the biological decaying process therein, the possible emission of annoying odours from the vessel at the same time being avoided or extensively reduced. As a result the medium processing time is shorter than 48 hours and the final compost is after 5-6 weeks inside the vessel fully matured and disinfected.

A stirring mechanism comprises a bottom agitator having an inlet for injection of air and a plurality of nozzles for outputting air. Said nozzles are arranged at different radiuses from a central shaft extending vertically along the vertically orientated vessel.

In various embodiments of the invention drying and sanitation can be achieved efficiently by heating decomposed waste before it is fed from the composter. The bottom agitator can be formed with arms protruding substantially in a radial direction from said central shaft and having nozzles at different radiuses where the nozzles have wider openings at larger radiuses.

Preferably, the free end of at least one agitator sweeps out a circle proximal to an internal wall of the vessel. The bottom agitator can be rotatable in both directions and is formed to have improved lifting properties and lower power requirements for rotation.

Waste is automatically fed into the composter by an auger at a pace programmed in the software that is independent of the pace of supply of waste into the waste receptacle.

### BRIEF DESCRIPTION OF THE DRAWINGS

In order that the manner in which the above recited and other advantages and objects of the invention are obtained will be readily understood, a more particular description of the invention briefly described above will be rendered by reference to specific embodiments thereof which are illustrated in the appended drawings.

Understanding that these drawings depict only typical embodiments of the invention and are not therefore to be considered to be limiting of its scope, the invention will be described and explained with additional specificity and detail through the use of the accompanying drawings in which:
- Fig. 1: is a schematic elevation view with partly cut out sections of one embodiment of a composter in accordance with the invention,
- Fig. 2: is a schematic perspective view of a bottom agitator used in the composter shown in Fig. 1,
- Fig. 3: is a schematic elevation view of the bottom agitator used in the composter shown in Fig. 1,
- Fig. 4: is a schematic plan view of a bottom agitator shown in Fig. 3,
- Fig. 5: is a schematic cross sectional view from line V-V in Fig. 3,
- Fig. 6: is a schematic perspective view of a double arm agitator used in the composter shown in Fig. 1,
- Fig. 7: is a schematic perspective view of an output arm used in the composter shown in Fig. 1,
- Fig. 8: is a schematic elevation view of the auger used in the composter shown in Fig. 1,
- Fig. 9: is a schematic diagram showing a fixed crusher arranged at the end of the auger inside the waste input receptacle, and
- Fig. 10: is a schematic perspective view of one embodiment of a composter in accordance with the invention.

### DETAILED DESCRIPTION

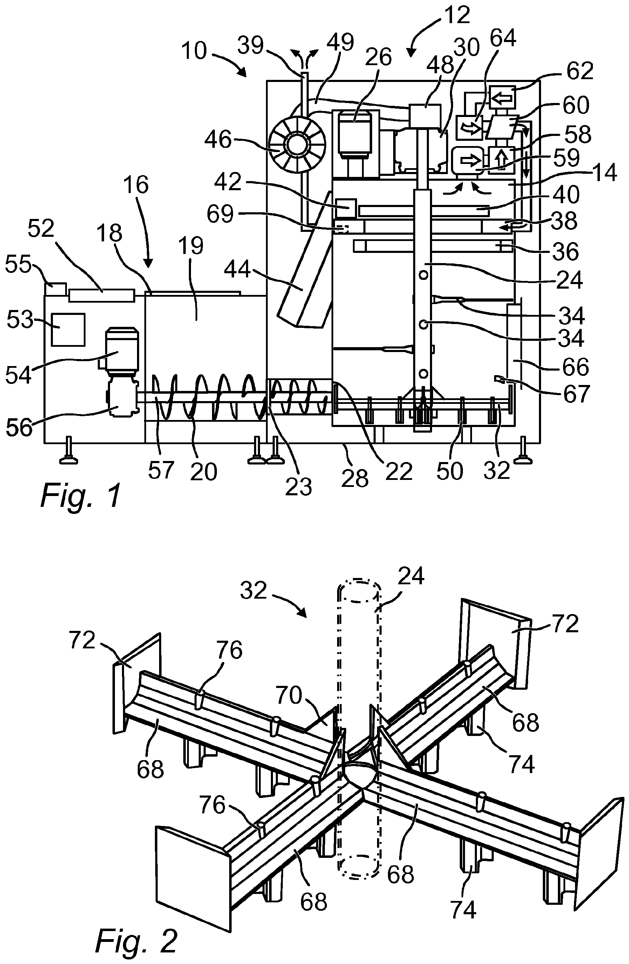

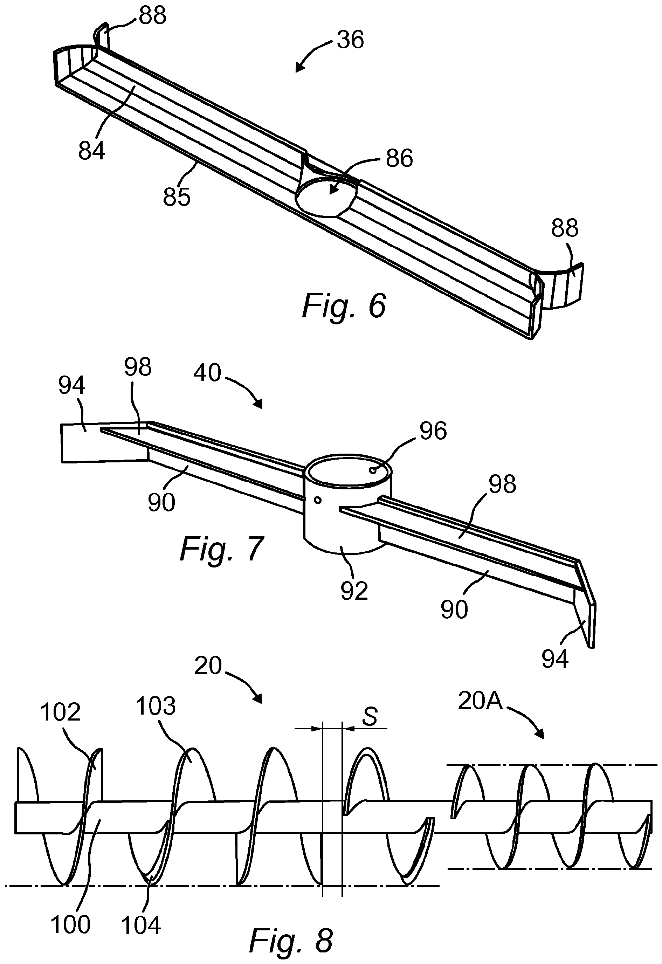

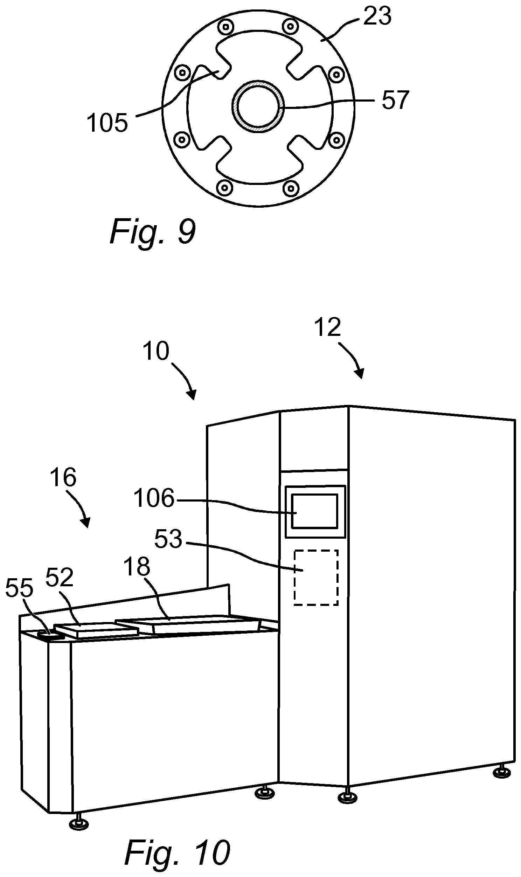

In the embodiment of a composter 10 shown in Fig. 1 a first module 12 to the right comprises a vertically extending cylindrical vessel 14 and a second module 16 to the left comprises a waste inlet hatch 18 covering an opening and an auger 20, c.f. Fig. 8. A waste input receptacle 19 is provided below said waste inlet hatch 18 and above said auger 20. The particularly designed auger 20 (Fig. 8) will cut up the waste and transport it to an inlet 22 at a bottom section of the vessel 14. The vessel is supported by a frame 28. In various embodiments an end section of the auger 20 close to the inlet 22 is formed as a feeder. At the end of the auger inside the waste input receptacle there is provided a fixed crusher, c.f. Fig. 9.

In the vessel 14 there is provided an agitator aggregate comprising a rotatable vertical shaft 24 in the centre of the vessel 14 and a plurality of agitators projecting radially from the shaft 24 to agitate and mix the waste supplied to the vessel through the inlet 22 in order to enable a necessary air supply to all parts of the material in the vessel. The vertical shaft 24 is connected to an electric drive motor 26 via a first gear 30 and is rotated in alternating directions at a comparatively low speed, such as around or less than 2 rpm. The vertical shaft 24 has a circular cross section and is hollow to allow an internal flow of air. As a result of the circular cross section air passages for air moving up in the vessel will not appear along the vertical shaft 24.

In the embodiment shown the agitator aggregate comprises four different agitator types. A first agitator type is a bottom agitator 32 arranged close to the bottom of the vessel 14. The bottom agitator 32 is further explained below with reference to Fig. 2 to Fig. 5. A second agitator type is a neutral arm 34. Five neutral arms 34 are used in this embodiment. Also more or less can be used. The neutral arms 34 extend radially from the shaft 24 at different angles. In various embodiments the neutral arms are separated by 90 degrees and extend through holes in the shaft 24. They are preferably welded to the shaft 24.

A third type of agitators is a double arm 36 arranged below a heating collar 38. The double arm 36 is fixed to and extends radially from the rotatable vertical shaft 24 with sections in two opposite directions. The two sections have different lengths and end with a curved blade that will move the waste radially toward the centre of the vessel when the rotatable vertical shaft 24 is rotated, c.f. Fig. 6 and related description below.

A fourth type of agitators is arranged above said heating collar 38. The fourth type of agitators is an output arm 40. It is formed with two sweeping plates at opposite ends, c.f. Fig. 7, to move composted material through a compost outlet covered by an outlet hatch 42. When the outlet hatch 42 is automatically opened during a predetermined time period such as 25 minutes at the end of the programmed 24-hour processing cycle composted material is moved by the output arm 40 through the compost outlet and to a compost outlet chute 44. Compost material can be collected through a hatch cover (not shown) on one side of the first module 12.

All agitators are connected to the shaft 24 to be rotated together with the shaft. In various embodiments the electric drive motor 26 rotates in alternating directions, so as to avoid clogging and accumulation of material adhering to the agitators. All agitators are designed to be operative in both rotating directions.

An air input fan 46 is connected to an air intake 48 mounted at an upper end of said rotatable vertical shaft 24. Air blown from the air input fan 46 is directed through the air intake 48 into said rotatable vertical shaft 24 through a pipe 49 and down to said bottom agitator 32. Air is then distributed through a plurality of nozzles 50 into the vessel 14, c.f. Fig. 2 to Fig. 5. Said nozzles are directed toward the bottom of the vessel 14. As a result waste fed into the vessel by said auger 20 will be effectively exposed to and mixed with air.

In the embodiment shown in Fig. 1 a waste balance 52 is arranged on the second module 16 close to the waste inlet hatch 18. All waste preferably is weighed before fed into the composter. Below the waste balance 52 an auger gear motor 54 is connected to an auger gear 56 operatively connected to said auger 20 with a centre axis 57. A control unit 53 is operatively connected to said waste balance 52 and to an input means 55 used to input data about waste material.

The auger 20 is controlled by the control unit 53 to rotate periodically during short intervals only at a comparatively low speed such as 5-15 rpm or around 10 rpm. In various embodiments the auger 20 is rotated during a rotation period extending over a few minutes every 60 minutes. The rotation period is at least 15 seconds, and is shorter than 10 minutes every 60 minutes and normally shorter than 5 minutes every 60 minutes. In a preferred embodiment the rotation period is 30-120 seconds every 60 minutes. The rotation period preferably is of equal length irrespective of the amount of waste in the waste input receptacle 19. Instead a predefined amount of waste material located in the waste input receptacle 19 is fed into the vessel 14 through the inlet 22 during a specific time period, such as between one and two minutes during each hour. The specific time period is adjusted in view of the type of waste material that is input to the composter. In various embodiments the auger 20 is rotated in reverse direction during a short period of time, such as around 15 seconds, at the beginning of each rotation period.

Air that has moved from the bottom part of the vessel 14 through the material in the vessel exits together with produced gases as exhaust gas at an upper part of the vessel 14. In the embodiment shown in Fig. 1 the exhaust gas from the vessel 14 is fed by an exhaust fan 59 to a filter 58 where particles are removed and then to a heat exchanger 60 where it is preheated. It is then heated further in a heating device 62 to a temperature suitable for a catalyst device 64. The catalyst device 64 removes odour from the exhaust gases in a deodorization process. In various embodiments the exhaust gas is heated from an approximate exhaust temperature of 50°-60° to about 350°.

In various embodiments the catalyst device 64 is a recuperative, catalytic oxidizer unit. The possibility to oxidize and completely remove odour pollutants such as hydrogen sulphide (H₂S), volatile organic compounds (VOC) and ammonia (NH₃), at low temperatures (250-400°C) in one single step is combined with the high thermal efficiency of a compact plate heat exchanger. A catalyst device having suitable properties is available under the trademark DEO-50 from the Swedish company CATATOR AB.

After catalytic treatment the exhaust air is fed through said heat exchanger 60 where some heat is transferred to the exhaust gas from the vessel 14. The temperature of the exhaust air is decreased in the heat exchanger 60. The exhaust air is then fed to said heating collar 38. Normally, the temperature of the exhaust air is about 100°-130° when entering the heating collar 38. In various embodiments air having a lower temperature is added so as to ensure that the temperature of the heating collar 38 will not be raised further. The heat transferred from the heating collar 38 to the composted material situated close to it will ensure that a complete sanitation of the composted material is achieved. Material will move upwardly through a circular opening in the heating collar 38. Heated air will pass through said heating collar 38 and exit through an exhaust tube 39.

A manhole cover 66 is provided on the vessel 14, so as to allow inspection and cleaning. In the embodiment shown in Fig. 1 the manhole cover 66 covers an opening in the vessel 14 just above a rotational plane of the bottom agitator 32. A first temperature transducer 67 is arranged inside said vessel 14 at a lower section thereof. A second temperature transducer 69 is arranged inside said heating collar 38.

The control unit 53 is operatively connected to a plurality of electrically operated means, such as the drive motor 26, the outlet hatch 42, the air input fan 46, the auger gear motor 54, the exhaust fan 59, the catalyst device 64 and a plurality of sensors and transducers, such as first temperature transducer 67 and second temperature transducer 69, arranged in different parts of the composter. The control unit 53 is operatively connected also to the waste balance 52 and to a switch (not shown) on the waste inlet hatch 18. As a result the control unit 53 can keep track of the amount of waste that is input to the waste input receptacle and also when such input occurs. Excess load on the drive motor 26 can be determined by the control unit 53.

A control program runs in the control unit 53 and will automatically actuate said electrically operated means in accordance with different operation modes. If the temperature within the vessel 14 or elsewhere in the composter 10 deviates from specified intervals warning signals can be output and/or the operation of the electrically operated means can be adjusted or stopped. The time elapsed since a last weighing and the last feeding by the auger 20 is continuously measured in the control unit 53. If the elapsed time periods extend predetermined time periods different sleep modes can be entered.

In the embodiment shown in Fig. 2 the bottom agitator 32 comprises four bottom arms 68 that are securely attached to the rotatable vertical shaft 24 at a lower section thereof. A reinforcement wing 70 extends from each arm 68 and is welded to the rotatable vertical shaft 24. At a free end of each of the bottom arms 68 there is attached a plate scraper 72. The plate scrapers 72 are provided with inclined side edges forming sharp edges. Each bottom arm 68 extends radially from the rotatable vertical shaft 24 to an inner jacket surface of the vessel 14 with the plate scrapers 70 engaging the inner jacket surface to prevent any waste material from getting stuck. The plate scrapers 70 also will lower the risk of clogging at the inlet 22.

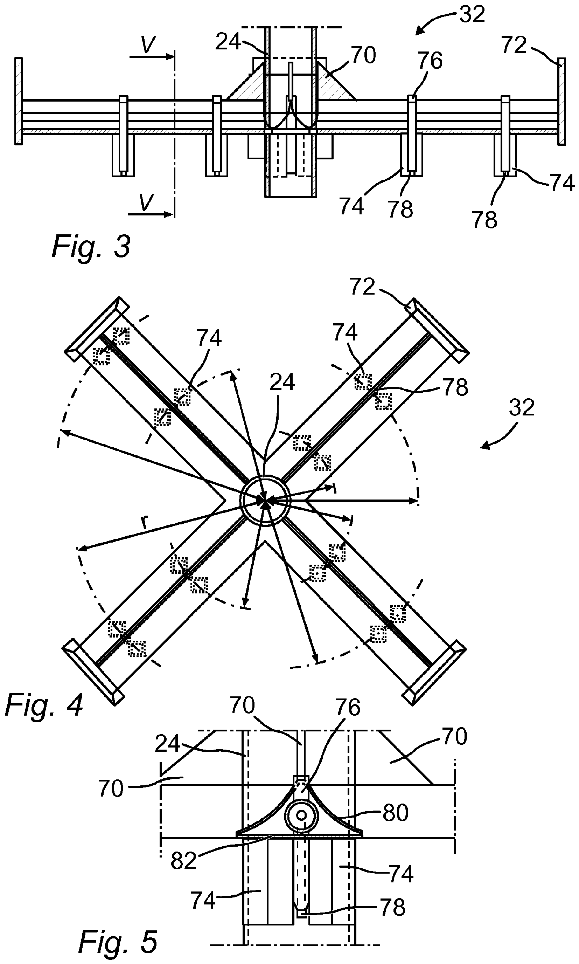

In the embodiment shown in Fig. 2 each bottom arm 68 of the bottom agitator 32 is provided with two air nozzles, c.f. Fig. 3, extending downwards from underneath the bottom arm. The air nozzles extend within protecting means 74 removing waste material and preventing it from plugging the air nozzles. The air nozzles are available through cleaning tubes and air nipples 76 extending to the upper side of the bottom arms 68.

The bottom agitator 32 as shown in Fig. 3 is formed with a plurality of air nozzles 78 extending within said protecting means 74. All air nozzles 78 are connected to the interior of said rotatable vertical shaft 24 to receive air delivered from said air input fan 46.

As shown also in Fig. 4 the air nozzles 78 are arranged at different radiuses r from said rotatable vertical shaft 24. This arrangement will improve mixing of air and waste and will ensure that all sectors will receive air. All air nozzles 78 are protected by said protecting means 74 formed as tubes having square cross section. Said tubes extend in vertical direction and are arranged with two side edges directed in radial direction from the rotatable vertical shaft 24 and two side edges directed in the rotational direction of the bottom arms 68. As a result the protecting means will plough through the waste material when the rotatable vertical shaft 24 is rotated in either direction.

The bottom arm 68 shown in Fig. 5 is formed as a hollow wing having two upper side walls 80 and a bottom wall 82. The upper side walls 80 are slightly curved to improve mixing and lifting properties when the bottom arm is rotated. The reinforcement wings 70 securely attach the bottom arm 68 to the rotatable vertical shaft 24.

The double arm 36 shown in Fig. 6 is formed as a hollow wing having two upper side walls 84 and a bottom plate 85. The upper side walls 84 are slightly curved to improve the lifting properties when the double arm is rotated. It has a circular opening 86 for receiving the rotatable vertical shaft 24. The double arm 36 is fixedly attached to the rotatable vertical shaft 24. The circular opening is offset from the middle point of the double arm, so as to provide one shorter arm section and one longer arm section. At each end of the double arm two curved shovel sections 88 extend perpendicularly from the ridge. When the double arm 36 is rotated two curved shovel sections 88 on the longer arm section sweeps out a circle proximal to the internal wall of the vessel 14 while the two curved shovel sections 88 on the shorter arm section sweeps out a circle closer to the rotatable vertical shaft 24. As a result the material will be moved from the wall of the vessel 14 towards the centre of the vessel 14 and thus towards the central opening of the heating collar 38, c.f. Fig. 1. The movement of the material will facilitate the transport of the material through the heating collar 38.

The output arm 40 shown in Fig. 7 comprises two flat bars 90 extending radially from an attachment ring 92. The two flat bars 90 have a main plain extending vertically. On free ends of the flat bars 90 there are provided deflected shovel plates 94 extending with an outer end to a radius within the wall of the vessel 14. The attachment ring 92 is fixedly attached to the rotatable vertical shaft 24 by screws through screw holes 96. Both shovel plates 94 are deflected in the same direction. As a result a first shovel plate will collect efficiently the compost material from the vessel wall when the output arm 40 is rotated in a first direction and a second shovel plate will efficiently push the same material towards the vessel wall. Compost material collected by the output arm 40 will exit through the outlet hatch that is opened at a regular time basis, such as during approximately 30 minutes once a day.

A limiting bar 98 extends perpendicularly from either one of the two flat bars 90 in proximity of an upper edge thereof. The limiting bars 98 are connected to said deflected shovel plates 94 and will improve the stability of the output arm while at the same time keeping down waste material when the output arm is rotated.

The auger 20 shown in Fig. 8 comprises a central shaft tube 100 carrying a plurality of axially spaced screw blade portions 102, 103. Each screw blade portion extends 360° and two adjacent screw blade portions are separated by an axial distance S and turned 90°. In various embodiments every second screw blade portion 103 is provided with a plastic lining 104. The screw blade portions 102, 103 cut and slice waste material efficiently. The separation and rotation of said screw blade portions 102, 103 will prevent larger pieces of waste material from just being transported by the auger and will improve cutting properties. An extension 20A of the auger 20 forms a feeder for feeding cut up waste material into the vessel 14.

The fixed crusher 23 as shown in Fig. 9 is arranged at the end of the auger inside the waste input receptacle. The fixed crusher 23 has an annular shape with four fingers 105 extending radially toward the centre axis 57 of the auger 20. Waste that has not been properly cut by the auger 20 will be crushed when fed through the fixed crusher 23 and into the vessel 14.

A basic embodiment of a composter in accordance with the invention is shown in Fig. 10. It comprises a first right module 12 and a second left module 16. The input means 55 is used to input the type of waste and other associated data of the waste put on the waste balance 52. All data is collected in the control unit 53. Process status and other information continuously are presented on an output means 106, such as a conventional display unit. In various embodiments the output means 106 comprises a pressure sensitive display such as a touchscreen replacing or forming an alternative to the input means 55.

The control unit 53 is arranged to control the operation of the composter 10 in accordance with a plurality of operation modes. During a sanitation and drying mode agitation will be performed by rotating all agitators 32, 34 and 36 with short brakes, such as 3-5 minutes per 60 minutes. The catalyst device 64 and heating device 62 are active and the auger gear motor 54 is turned off.

During a normal hybrid operation mode the auger gear motor 54 periodically activated to input a predetermined amount of waste into the vessel 14. As in the sanitation and drying mode agitation will be performed by rotating the rotatable shaft supporting all agitators with short brakes, such as 3-5 minutes per 60 minutes, and the catalyst device 64 and heating device 62 are active.

When there is composted material ready to output a compost output mode is entered and the outlet hatch 42 is opened while still rotating the rotatable shaft and all agitators. The auger gear motor 54 is turned off.

The control unit 53 comprises a timer that continuously measures the time passed since the last opening of the waste inlet hatch 18 and the last operation of the auger 20. When no opening of the waste inlet hatch 18 has been recorded for a first time period, such as about 24 hours, a first sleep mode is entered. In the first sleep mode agitation is performed in intervals, such as about three minutes every fifteen minutes. The air input fan 46 and the exhaust fan 59 are turned on during time intervals, such as during four minutes every fifteen minutes. The auger gear motor 54 is turned off.

A second sleep mode is entered from the first sleep mode when it is determined that no waste remains inside the waste input receptacle 19. This can be done since all waste is weighed and the auger 20 is operated to process a specific amount of waste during each operating step. In the second sleep mode agitation is performed in intervals, such as about three minutes every fifteen minutes. The air input fan 46 and the exhaust fan 59 are turned on during time intervals, such as during four minutes every fifteen minutes. The auger gear motor 54 is turned on.

Signals from the different temperature transducers and signals indicating the operating conditions of the drive motor 26 and the auger gear motor 54, such as torsional moments, are received by the control unit 53. If any of these signals indicate that there is a malfunction or a safety hazard a safety mode is entered. The operating conditions can be measures for instance by measuring the power consumption of said motors.

In various embodiments the method in accordance with the invention further comprises rotating a powered central rotatable vertical shaft 24 supporting said rotating agitators 32; 34; 36 continuously at a speed of 1-5 rpm.

In various embodiments the method in accordance with the invention further comprises rotating said auger 20 at a speed of 5-15 rpm during a short time interval of 1-5 minutes every 60 minutes of operation.

A method in accordance with the invention, further comprising maintaining a temperature of at least 70° during at least one hour in composted material at an upper section of said vessel 14.

A method in accordance with the invention, further comprising directing air output from said catalyst process into a heating collar (38) arranged at an upper section of said vessel (14).

## Claims

1. An organic waste composter (10) comprising a processing vessel (14) having at least one heating unit, a stirring mechanism, a means (46) for injection of air for composting waste, a waste inlet hatch (18), a waste input receptacle (19), a rotating auger (20) arranged to receive waste from said waste input receptacle (19), to cut said waste and to transport said waste to a first end of said processing vessel, and a heating unit (38) located proximal to a second end of said vessel (14), wherein said processing vessel (14) is vertically orientated, and said stirring mechanism comprises a powered central rotatable vertical shaft (24) extending vertically along said vertically orientated vessel (14) with a plurality of vertically spaced agitators (32; 34; 36), ***characterised* in**
that said rotating auger (20) is operatively connected to a control unit (53),
that said control unit (53) is arranged to activate said rotating auger (20) periodically during a rotation period extending at least 15 seconds and being shorter than 10 minutes every 60 minutes to feed waste automatically into the composter at a programmed pace that is independent of the pace of supply of waste into the waste input receptacle, and
that said stirring mechanism comprises a bottom agitator (32) fixedly attached to said rotatable vertical shaft (24) and having an inlet connected to said means for injection of air, wherein said bottom agitator (32) is rotatable in both directions and comprises four bottom arms (68) extending radially from said rotatable vertical shaft (24) and a plurality of nozzles (50) for outputting air at a bottom section of said vessel (14).

2. An organic waste composter (10) as claimed in claim 1, wherein said control unit (53) is operatively connected to a waste balance (52) and to an input means (55) for receiving data relating to weight and type of waste of the waste that is received in said a waste input receptacle (19).

3. An organic waste composter (10) as claimed in claim 1 or claim 2, wherein said heating unit (38) is located proximal to a top end of said vessel (14) .

4. An organic waste composter (10) as claimed in claim 1, wherein said plurality of nozzles (50) are arranged at different radiuses from said rotatable vertical shaft (24).

5. An organic waste composter (10) as claimed in claim 1, wherein said rotatable vertical shaft (24) has a circular cross section and is provided with an internal passage for air between said means (46) for injection of air and said bottom agitator (32).

6. An organic waste composter (10) as claimed in any of the preceding claims, wherein an air handling unit (59) is provided for extracting air from said vessel (14), a heating device (62) is provided for receiving air from said air handling unit (59) and for heating said air, and a catalyst device (64) is provided for removing odour compounds present in said heated air.

7. A waste composter (10) as claimed in claim 6, wherein a heat exchanger (60) is provided for transferring heat from air output from said catalyst device (64) to air extracted from said vessel (14).

8. A waste composter (10) as claimed in claim 7, wherein a heating collar (38) is connected to said heat exchanger (60) for receiving heated air.

9. A waste composter (10) as claimed in claim 7 or claim 8, wherein a filter (58) is provided between said air handling unit (59) and said heat exchanger (60)

10. A waste composter (10) as claimed in claim 1, wherein said bottom agitator (32) has a symmetrical cross section, so as to be rotatable in both directions.

11. A method of composting organic waste material, comprising the steps:
a) receiving organic waste material,
b) cutting said waste material with a rotating auger (20),
c) inputting the cut up waste material into a first end section of a vessel (14) by rotating said auger (20),
d) stirring the cut up waste material in said vessel (14),
e) heating the composted material at a second end section of said vessel (14),
f) outputting composted material from the second end section of said vessel (14),
g) ***characterised* by**
h) rotating said auger (20) periodically during a rotation period extending at least 15 seconds and being shorter than 10 minutes every 60 minutes to feed waste automatically into the composter at a programmed pace that is independent of the pace of supply of waste into the waste input receptacle, and
i) injecting air at a bottom section of said vessel (14) by outputting air from a plurality of nozzles of a bottom agitator (32) fixedly attached to a vertically rotatable shaft, wherein said bottom agitator (32) is rotatable in both directions and comprises four bottom arms (68) extending radially from said rotatable vertical shaft (24).

12. A method as claimed in claim 11, further comprising controlling composting in a plurality of operation modes by receiving input data relating to weight and type of organic waste material, measuring a time period representative of the time that passed since a most recent reception of input data and automatically changing mode of operation from a normal hybrid operation mode to a first sleep mode when said measured time period extends a predetermined first time period.

13. A method as claimed in claim 11 or claim 12, further comprising receiving operation data representative of torsional moment during rotating said agitators (32; 34; 36) in said vessel (14) and interrupting said normal hybrid operation mode when said operation data exceeds a predetermined moment value.

14. A method as claimed in claim 11, further comprising extracting air and odour compounds produced during composting from said vessel (14), heating said air and odour compounds, and processing said air and odour compounds in a catalyst process for removing odour compounds.

15. A method as claimed in claim 14, further comprising transferring heat from air output from said catalyst process to air extracted from said vessel (14) and heating the composted material at an upper section of said vessel (14) with air output from said catalyst process after said heat transfer.

## Patentansprüche

1. Biomüllkomposter (10) umfassend einen Verarbeitungsbehälter (14) mit mindestens einer Heizeinheit, einem Rührwerk, ein Mittel (46) zum Einspritzen von Luft zum Kompostieren von Abfall, eine Abfalleinlassklappe (18), eine Abfalleingangsaufnahme (19), eine rotierende Schnecke (20), die angeordnet ist, um Abfall von der Abfalleingangsaufnahme (19) aufzunehmen, den Abfall zu zerschneiden und den Abfall zu einem ersten Ende des Verarbeitungsbehälters zu transportieren, und eine Heizeinheit (38), die nahe bei einem zweiten Ende des Verarbeitungsbehälters (14) angeordnet ist, wobei der Verarbeitungsbehälter (14) vertikal ausgerichtet ist und das Rührwerk eine angetriebene, zentrale, drehbare, vertikale Welle (24) umfasst, die sich vertikal entlang des vertikal ausgerichteten Behälters (14) mit mehreren vertikal beabstandeten Rührern (32, 34, 36) erstreckt, **dadurch gekennzeichnet**,
dass die rotierende Schnecke (20) funktional mit einer Steuereinheit (53) verbunden ist,
dass die Steuereinheit (53) so angeordnet ist, um die rotierende Schnecke (20) periodisch während einer sich mindestens über 15 Sekunden erstreckenden Rotationsperiode, die kürzer als 10 Minuten alle 60 Minuten ist, zu aktivieren, um Abfälle automatisch in den Komposter in einem programmierten Tempo einzuspeisen, das unabhängig vom Tempo der Zuführung von Abfällen in die Abfalleingangsaufnahme ist, und
dass das Rührwerk einen Bodenrührer (32) umfasst, der fest an der drehbaren, vertikalen Welle (24) befestigt ist und einen mit dem Mittel zum Einspritzen von Luft verbundenen Einlass aufweist, wobei der Bodenrührer (32) in beide Richtungen drehbar ist und vier Bodenarme (68) aufweist, die sich radial von der drehbaren, vertikalen Welle (24) erstrecken, und mehrere Düsen (50) zum Ausgeben von Luft an einem unteren Abschnitt des Behälters (14) umfasst.

2. Biomüllkomposter (10) nach Anspruch 1, wobei die Steuereinheit (53) funktional mit einer Abfallwaage (52) und mit einem Eingabemittel (55) zum Empfangen von Daten über das Gewicht und die Art des Abfalls, der in der Abfalleingangsaufnahme (19) aufgenommen wird, verbunden ist.

3. Biomüllkomposter (10) nach Anspruch 1 oder Anspruch 2, wobei die Heizeinheit (38) nahe bei einem oberen Ende des Behälters (14) angeordnet ist.

4. Biomüllkomposter (10) nach Anspruch 1, wobei die mehreren Düsen (50) in unterschiedlichen Radien von der drehbaren, vertikalen Welle (24) angeordnet ist.

5. Biomüllkomposter (10) nach Anspruch 1, wobei die drehbare, vertikale Welle (24) einen kreisförmigen Querschnitt aufweist und mit einem inneren Luftdurchlass zwischen dem Mittel (46) zum Einspritzen von Luft und dem Bodenrührer (32) bereitgestellt ist.

6. Biomüllkomposter (10) nach einem der vorhergehenden Ansprüche, wobei eine Luftaufbereitungseinheit (59) zum Absaugen von Luft aus dem Behälter (14) bereitgestellt ist, eine Heizvorrichtung (62) zum Empfangen von Luft aus der Luftaufbereitungseinheit (59) und zum Heizen der Luft bereitgestellt ist und eine Katalysatorvorrichtung (64) zum Entfernen von Geruchsverbindungen, die in der erwärmten Luft vorhanden sind, bereitgestellt ist.

7. Müllkomposter (10) nach Anspruch 6, wobei ein Wärmetauscher (60) zum Übertragen von Wärme aus der Luft, die von der Katalysatorvorrichtung (64) ausgegeben wird, zu Luft, die von dem Behälter (14) abgesaugt wird.

8. Müllkomposter (10) nach Anspruch 7, wobei eine Heizmanschette (38) mit dem Wärmetauscher (60) zum Aufnehmen von erwärmter Luft verbunden ist.

9. Müllkomposter (10) nach Anspruch 7 oder Anspruch 8, wobei ein Filter (58) zwischen der Luftaufbereitungseinheit (59) und dem Wärmetauscher (60) bereitgestellt ist.

10. Müllkomposter (10) nach Anspruch 1, wobei der Bodenrührer (32) einen symmetrischen Querschnitt aufweist, sodass er in beide Richtungen drehbar ist.

11. Verfahren zum Kompostieren von organischem Abfall, umfassend die Schritte:
a) Empfangen von organischem Abfallmaterial,
b) Schneiden des Abfallmaterials mit einer rotierenden Schnecke (20),
c) Zuführen des zerkleinerten Abfallmaterials in einen ersten Endabschnitt eines Behälters (14) durch Drehen der Schnecke (20),
d) Umrühren des zerkleinerten Abfallmaterials in dem Behälter (14),
e) Erwärmen des kompostierten Materials in einem zweiten Endabschnitt des Behälters (14),
f) Ausgeben von kompostiertem Material vom zweiten Endabschnitt des Behälters (14),
g) **gekennzeichnet durch**
h) Drehen der Schnecke (20) periodisch während einer Rotationsperiode, die sich mindestens über 15 Sekunden erstreckt und kürzer als 10 Minuten alle 60 Minuten ist, um Abfall automatisch in den Komposter mit einem programmierten Tempo einzuspeisen, das unabhängig vom Tempo der Zuführung des Abfalls in die Abfalleingangsaufnahme ist, und
i) Einspritzen von Luft an einem unteren Abschnitt des Behälters (14) durch Ausgeben von Luft mit mehreren Düsen eines Bodenrührers (32), der fest mit einer vertikal drehbaren Welle verbunden ist, wobei der Bodenrührer (32) in beide Richtungen drehbar ist und vier Bodenarme (68) aufweist, die sich radial von der rotierbaren, vertikalen Welle (24) erstrecken.

12. Verfahren nach Anspruch 11, ferner umfassend ein Steuern der Kompostierung in mehreren Betriebsmodi durch Empfangen von Eingangsdaten, die sich auf das Gewicht und die Art des organischen Abfallmaterials beziehen, das Messen einer Zeitperiode, die repräsentativ für die Zeit ist, die seit einem letzten Empfangen von Eingangsdaten vergangen ist, und ein automatisches Ändern des Betriebsmodus von einem normalen Hybridbetriebsmodus in einen ersten Schlafmodus, wenn die gemessene Zeitspanne eine vorbestimmte erste Zeitperiode überschreitet.

13. Verfahren nach Anspruch 11 oder 12, ferner umfassend das Empfangen von Betriebsdaten, die repräsentativ für ein Torsionsmoment während des Drehens der Rührer (32, 34, 36) im Behälter (14) sind, und Unterbrechen des normalen Hybridbetriebsmodus, wenn die Betriebsdaten einen vorbestimmen Momentwert überschreiten.

14. Verfahren nach Anspruch 11, ferner umfassend das Absaugen von Luft und Geruchsverbindungen, die während des Kompostierens vom Behälter (14) erzeugt werden, Erwärmen der Luft und der Geruchsverbindungen und Verarbeiten der Luft und der Geruchsverbindungen in einem Katalysatorprozess zum Entfernen der Geruchsverbindungen.

15. Verfahren nach Anspruch 14, ferner umfassend
Übertragen von Wärme aus der Luft, die von dem Katalysatorprozess ausgegeben wird, auf Luft, die vom Behälter (14) abgesaugt wird, und Erwärmen des kompostierten Materials in einem oberen Abschnitt des Behälters (14) mit Luft, die vom Katalysatorprozess nach der Wärmeübertragung ausgegeben wird.

## Revendications

1. Système de compostage de déchets organiques (10) comprenant un récipient de traitement (14) présentant au moins une unité chauffante, un mécanisme d'agitation, un moyen (46) d'injection d'air destiné au compostage de déchets, une trappe d'introduction de déchets (18), un réceptacle d'entrée de déchets (19), une vis sans fin rotative (20) agencée pour recevoir des déchets provenant dudit réceptacle d'entrée de déchets (19), pour découper lesdits déchets et pour transporter lesdits déchets vers une première extrémité dudit récipient de traitement, et une unité chauffante (38) située de manière proximale par rapport à une deuxième extrémité dudit récipient (14), où ledit récipient de traitement (14) est orienté verticalement, et ledit mécanisme d'agitation comprend un arbre vertical rotatif central alimenté électriquement (24) s'étendant verticalement le long dudit récipient orienté verticalement (14) avec une pluralité d'agitateurs espacés verticalement (32 ; 34 ; 36), ***caractérisé* en**
**ce que** ladite vis sans fin rotative (20) est connectée de manière fonctionnelle à une unité de commande (53),
ce que ladite unité de commande (53) est agencée pour activer ladite vis sans fin rotative (20) périodiquement sur une période de rotation d'au moins 15 secondes et de moins de 10 minutes toutes les 60 minutes pour alimenter automatiquement en déchets le système de compostage à une cadence programmée qui ne dépend pas de la cadence d'alimentation en déchets du réceptacle d'entrée de déchets, et
ce que ledit mécanisme d'agitation comprend un agitateur inférieur (32) attaché fixement audit arbre vertical rotatif (24) et présentant une entrée reliée audit moyen d'injection d'air, où ledit agitateur inférieur (32) peut être entraîné en rotation dans les deux sens et comprend quatre bras inférieurs (68) s'étendant radialement depuis ledit arbre vertical rotatif (24) et une pluralité de buses (50) destinées à éjecter de l'air au niveau d'une partie inférieure dudit récipient (14).

2. Système de compostage de déchets organiques (10) selon la revendication 1, dans lequel ladite unité de commande (53) est connectée de manière fonctionnelle à une balance à déchets (52) et à un moyen d'entrée (55) destiné à recevoir des données relatives à la masse et au type de déchets des déchets qui sont reçus dans ledit réceptacle d'entrée de déchets (19).

3. Système de compostage de déchets organiques (10) selon la revendication 1 ou la revendication 2, dans lequel ladite unité chauffante (38) est située de manière proximale par rapport à une extrémité supérieure dudit récipient (14).

4. Système de compostage de déchets organiques (10) selon la revendication 1, dans lequel ladite pluralité de buses (50) sont agencées à différents rayons depuis ledit arbre vertical rotatif (24).

5. Système de compostage de déchets organiques (10) selon la revendication 1, dans lequel ledit arbre vertical rotatif (24) présente une section transversale circulaire et est doté d'un passage interne d'air entre ledit moyen (46) d'injection d'air et ledit agitateur inférieur (32).

6. Système de compostage de déchets organiques (10) selon l'une quelconque des revendications précédentes, dans lequel une unité d'extraction d'air (59) est prévue pour extraire de l'air dudit récipient (14), un dispositif chauffant (62) est prévu pour recevoir l'air provenant de ladite unité d'extraction d'air (59) et pour chauffer ledit air, et un dispositif de catalyse (64) est prévu pour éliminer des composés odorants présents dans ledit air chauffé.

7. Système de compostage de déchets (10) selon la revendication 6, dans lequel un échangeur thermique (60) est prévu pour transférer de la chaleur de la sortie d'air dudit dispositif de catalyse (64) à l'air extrait dudit récipient (14).

8. Système de compostage de déchets (10) selon la revendication 7, dans lequel un collier chauffant (38) est relié audit échangeur thermique (60) afin de recevoir l'air chauffé.

9. Système de compostage de déchets (10) selon la revendication 7 ou la revendication 8, dans lequel un filtre (58) est prévu entre ladite unité d'extraction d'air (59) et ledit échangeur thermique (60).

10. Système de compostage de déchets (10) selon la revendication 1, dans lequel ledit agitateur inférieur (32) présente une section transversale symétrique, de sorte à pouvoir être entraîné en rotation dans les deux sens.

11. Procédé de compostage de déchets organiques, comprenant les étapes consistant à :
a) recevoir des déchets organiques,
b) découper lesdits déchets avec une vis sans fin rotative (20),
c) introduire les déchets découpés dans une première partie d'extrémité d'un récipient (14) à l'aide de ladite vis sans fin rotative (20),
d) agiter les déchets découpés dans ledit récipient (14),
e) chauffer les déchets compostés au niveau d'une deuxième partie d'extrémité dudit récipient (14),
f) évacuer les déchets compostés depuis la deuxième partie d'extrémité dudit récipient (14),
g) ***caractérisé* par**
h) le fait d'entraîner en rotation ladite vis sans fin (20) périodiquement sur une période de rotation d'au moins 15 secondes et de moins de 10 minutes toutes les 60 minutes pour alimenter automatiquement en déchets le système de compostage à une cadence programmée qui ne dépend pas de la cadence d'alimentation en déchets du réceptacle d'entrée de déchets, et
i) le fait d'injecter de l'air au niveau d'une partie inférieure dudit récipient (14) en éjectant de l'air depuis une pluralité de buses d'un agitateur inférieur (32) attaché fixement à un arbre vertical rotatif, où ledit agitateur inférieur (32) peut être entraîné en rotation dans les deux sens et comprend quatre bras inférieurs (68) s'étendant radialement depuis ledit arbre vertical rotatif (24).

12. Procédé selon la revendication 11, comprenant en outre le fait de commander le compostage dans une pluralité de modes de fonctionnement en recevant des données d'entrée relatives à la masse et au type de déchets organiques, en chronométrant un intervalle de temps représentatif du temps qui s'est écoulé depuis la réception la plus récente de données d'entrée et en changeant automatiquement de mode de fonctionnement pour passer d'un mode de fonctionnement hybride normal à un premier mode de veille lorsque ledit intervalle de temps chronométré atteint un premier intervalle de temps prédéterminé.

13. Procédé selon la revendication 11 ou la revendication 12, comprenant en outre le fait de recevoir des données de fonctionnement représentatives d'un moment de torsion durant la rotation desdits agitateurs (32 ; 34 ; 36) dans ledit récipient (14) et le fait d'interrompre ledit mode de fonctionnement hybride normal lorsque lesdites données de fonctionnement dépassent une valeur de moment prédéterminée.

14. Procédé selon la revendication 11, comprenant en outre le fait d'extraire de l'air et des composés odorants produits durant le compostage hors dudit récipient (14), le fait de chauffer ledit air et lesdits composés odorants, et le fait de traiter ledit air et lesdits composés odorants via un processus de catalyse afin d'éliminer les composés odorants.

15. Procédé selon la revendication 14, comprenant en outre
le fait de transférer de la chaleur de la sortie d'air dudit processus de catalyse à l'air extrait dudit récipient (14) et le fait de chauffer les déchets compostés au niveau d'une partie supérieure dudit récipient (14) avec la sortie d'air dudit processus de catalyse après ledit transfert de chaleur.
